(19) Europäisches Patentamt
European Patent Office
Office européen des brevets

(11) **EP 3 713 771 B1**

(12) **FASCICULE DE BREVET EUROPEEN**

(45) Date de publication et mention de la délivrance du brevet:
**01.05.2024 Bulletin 2024/18**

(21) Numéro de dépôt: **18819189.4**

(22) Date de dépôt: **15.11.2018**

(51) Classification Internationale des Brevets (IPC):
**B60C 1/00** *(2006.01)*    **C08C 3/02** *(2006.01)*
**C08L 7/00** *(2006.01)*

(52) Classification Coopérative des Brevets (CPC):
(C-Sets disponibles)
**C08C 3/02; B60C 1/00; C08K 5/17; C08L 7/00;**
C08K 2201/019                      (Cont.)

(86) Numéro de dépôt international:
**PCT/FR2018/052844**

(87) Numéro de publication internationale:
**WO 2019/102109 (31.05.2019 Gazette 2019/22)**

(54) **CAOUTCHOUC NATUREL**

NATURKAUTSCHUK

NATURAL RUBBER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.11.2017 FR 1761082**

(43) Date de publication de la demande:
**30.09.2020 Bulletin 2020/40**

(73) Titulaire: **Compagnie Générale des Etablissements Michelin**
**63000 Clermont-Ferrand (FR)**

(72) Inventeurs:
• **GRANET, Françoise**
**63040 Clermont-Ferrand Cedex 9 (FR)**
• **BERNARD, Denis**
**63040 Clermont-Ferrand Cedex 9 (FR)**
• **DUSSILLOLS, Jérôme**
**63040 Clermont-Ferrand Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**WO-A1-2017/046204      US-B2- 6 492 447**

• **SUSHEEL KALIA ET AL: "Natural Rubber: Production, Properties and Applications", 26 septembre 2011 (2011-09-26), NATURAL RUBBER: PRODUCTION, PROPERTIES AND APPLICATIONS,, PAGE(S) 403 - 436, XP002679685, ISBN: 978-1-118-16479-2 page 420; tableau 14.3**

(52) Classification Coopérative des Brevets (CPC):
(Cont.)

C-Sets
**C08K 5/17, C08L 7/00**

**Description**

La présente invention concerne un caoutchouc naturel ainsi qu'une composition de caoutchouc à base d'un tel caoutchouc naturel et un produit semi-fini contenant la composition de caoutchouc destinés à être utilisés dans un pneumatique.

Le caoutchouc naturel provient de la matière sèche caoutchouteuse du latex de caoutchouc naturel extraite de l'hévéa après saignée : le latex est généralement recueilli dans un godet appelé tasse. Le caoutchouc naturel est donc le produit sec résultant de la coagulation du latex. La production du caoutchouc naturel ne se limite pas à la saignée de l'hévéa et à la récolte du latex, mais comprend de nombreuses autres étapes qui ont un impact sur les caractéristiques du caoutchouc naturel. On répertorie deux grandes voies de production de caoutchouc naturel, l'une basée sur une coagulation dite spontanée et l'autre sur une coagulation dite provoquée. Selon la voie de la coagulation spontanée, le latex coagule directement dans la tasse pour former un coagulum dit fond de tasse (en anglais « cup lump »), appellation bien connue de l'homme du métier dans le domaine de la fabrication du caoutchouc naturel. Selon la voie de la coagulation provoquée, le latex encore liquide dans la tasse est transvasé, éventuellement stabilisé ou centrifugé, puis coagulé par exemple à l'aide d'un agent chimique, par exemple par l'ajout d'un acide, pour former un caoutchouc naturel de latex. Par exemple, les caoutchoucs naturels communément utilisés dans l'industrie du pneumatique, sont les grades TSR20 et RSS qui sont respectivement un caoutchouc naturel de fond de tasse et un caoutchouc naturel de latex.

Dans la production du caoutchouc naturel de latex, le latex est généralement filtré avant la coagulation pour éliminer feuille, brindille, sable, terre et autres débris qui sont des corps étrangers, également appelés impuretés. Dans la production du caoutchouc naturel de fond de tasse, le coagulum de fond de tasse est lui aussi souillé par des feuilles, des brindilles, du sable, de la terre et autres débris. Leur élimination du coagulum de fond de tasse passe traditionnellement par un procédé qui comprend des opérations successives de déchiquetage et de lavage en piscine. Malheureusement ce procédé s'avère moins efficace que les opérations de filtration de latex, ce qui conduit à un caoutchouc naturel de fond de tasse qui contient non seulement des impuretés de plus grosse taille, mais aussi des impuretés en plus grand nombre que le caoutchouc naturel de latex. Par conséquent, une feuille fumée de caoutchouc naturel de grade RSS est considérée comme de meilleure qualité qu'une balle de grade TSR20.

La présence d'impuretés de taille supérieure à 0.5 mm dans le caoutchouc naturel de fond de tasse peut être à l'origine de la formation de trou dans un produit semi-fini fin, en particulier lors de la fabrication de produit semi-fini contenant des bandes de composition de caoutchouc de très faible épaisseur. Le caoutchouc naturel de fond de tasse comme le grade TSR20 peut donc s'avérer problématique dans la confection de produits semi-finis fins. C'est pourquoi, une feuille fumée de grade RSS peut être préférée au grade TSR20 dans la confection de produits semi-finis fins, par exemple obtenus par calandrage. Par ailleurs, la présence d'impuretés de taille supérieure à 0.5 mm ou à 0.1 mm dans un produit semi-fini utilisé dans un pneumatique peut favoriser la formation de fissure dans le produit semi-fini, ce qui peut diminuer la performance du pneumatique.

Le caoutchouc naturel de latex se distingue du caoutchouc naturel de fond de tasse aussi par ses propriétés. La différence des propriétés peut être attribuée au phénomène de maturation du coagulum de fond de tasse, phénomène qui se produit après la saignée. La maturation du coagulum de fond de tasse est un phénomène bien connu de l'homme du métier et désigne une évolution du coagulum de fond de tasse qui se produit après la saignée de l'hévéa sous l'effet d'actions bactériologiques ou enzymatiques qui seraient provoquées par la contamination du coagulum de fond de tasse par des microorganismes naturellement présents dans l'environnement des plantations. Typiquement un coagulum de fond de tasse est soumis à une longue maturation pouvant aller jusqu'à plusieurs semaines. Or il est connu que le temps de maturation influe sur l'indice de rétention de plasticité (PRI) du caoutchouc naturel. Typiquement le PRI d'un caoutchouc naturel de fond de tasse comme le grade TSR20 est très inférieur à 80, alors que le PRI d'un caoutchouc naturel de latex comme une feuille fumée de caoutchouc naturel de grade RSS est supérieur à 80. Ces valeurs relatives de PRI traduisent sur le plan des propriétés une supériorité du caoutchouc naturel de latex vis-à-vis de la résistance à la thermooxydation. Le PRI est également affecté par les conditions de séchage du caoutchouc naturel. Le séchage sous air traditionnellement utilisé pour produire le grade TSR20 qui requiert des températures élevées, 90 à 130°C, contribue aussi à diminuer le PRI.

Or il est connu qu'un caoutchouc naturel à fort PRI comme une feuille fumée de caoutchouc naturel de grade RSS requiert une plastification avant son utilisation dans une composition de caoutchouc. La plastification d'un caoutchouc est une étape de mastication du caoutchouc destinée à diminuer sa viscosité en vue d'améliorer son aptitude à la mise en oeuvre (en anglais « processability ») et de faciliter l'incorporation et la dispersion des autres ingrédients dans le caoutchouc lors de la confection de la composition de caoutchouc. Comme la plastification est une étape supplémentaire dans la confection d'un produit semi-fini, elle a pour conséquence de réduire la productivité d'une ligne de production du produit semi-fini, ce qui diminue l'intérêt d'utiliser un grade RSS au lieu du grade TSR20 qui n'a pas besoin d'être plastifié aussi longtemps qu'un grade RSS.

Il est donc une préoccupation de fournir une alternative à un caoutchouc naturel de grade RSS sans présenter les inconvénients mentionnés ci-dessus.

La Demanderesse a découvert un caoutchouc naturel de fond de tasse qui concilie contre toute attente un indice de rétention de plasticité aussi élevé que celui d'un caoutchouc naturel de grade RSS et une aptitude à la mise en oeuvre similaire à celle du grade TSR20. Par ailleurs, l'utilisation du caoutchouc naturel de fond de tasse conforme à l'invention n'est pas problématique dans la fabrication de produits semi-finis contenant des bandes de composition de caoutchouc de très faible épaisseur.

Ainsi, un premier objet de l'invention est un caoutchouc naturel de fond de tasse dépourvu d'impuretés de taille supérieure à 0.5 mm et présentant un indice de rétention de plasticité (PRI) supérieur à 80.

Un deuxième objet de l'invention est une composition de caoutchouc comprenant un caoutchouc naturel conforme à l'invention.

Un troisième objet de l'invention est un produit semi-fini comprenant une composition de caoutchouc conforme à l'invention.

Un quatrième objet de l'invention est un pneumatique comportant une composition de caoutchouc conforme à l'invention ou un produit semi-fini conforme à l'invention.

## I. DESCRIPTION DETAILLEE DE L'INVENTION :

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Sauf indication expresse différente, tous les pourcentages (%) indiqués sont des % en masse.

Dans la présente demande, on entend par latex de caoutchouc naturel le latex issu de la saignée de l'hévéa.

Le caoutchouc naturel conforme à l'invention est un caoutchouc naturel de fond de tasse, c'est à dire un caoutchouc issu de la voie de la coagulation spontanée du latex. Autrement dit, il est la matière sèche du coagulum de fond de tasse. La teneur en eau dans le caoutchouc naturel est préférentiellement inférieure à 0.8%.

Le caoutchouc naturel de fond de tasse conforme à l'invention a pour caractéristique essentielle d'avoir un indice de rétention de plasticité (PRI) supérieur à 80. De préférence, son PRI est supérieur ou égal à 85. Le PRI est le ratio exprimé en pourcentage de la plasticité du caoutchouc naturel vieilli sur la plasticité du caoutchouc naturel avant vieillissement. Sa détermination est utilisée pour donner une indication de la résistance à l'oxydation du caoutchouc naturel. Plus la valeur est élevée, meilleure est la résistance à l'oxydation thermique et meilleure est la résistance à la rupture des chaînes polymères par oxydation.

Le caoutchouc naturel de fond de tasse conforme à l'invention, malgré le PRI élevé, présente une bonne aptitude à la mise en oeuvre qui est comparable à celle du grade TSR20, puisqu'il ne demande pas davantage de temps de plastification que le grade TSR20. Le caoutchouc naturel de fond de tasse conforme à l'invention a donc la particularité de concilier deux propriétés généralement connues de l'homme du métier du caoutchouc naturel pour être antinomiques que sont la résistance à la thermooxydation et l'aptitude à la mise en oeuvre.

Le caoutchouc naturel de fond de tasse conforme à l'invention a aussi pour caractéristique essentielle d'être dépourvu d'impuretés de taille supérieure à 0.5 mm. On entend par impureté de taille supérieure à une dimension X toute impureté qui est retenue par un tamis dont la dimension de la maille est égale à X. Par exemple, une impureté de taille supérieure à 0.5 mm est retenue sur un tamis dont la dimension de la maille est égale à 0.5 mm. L'absence d'impuretés de taille supérieure à 0.5 mm donne au caoutchouc naturel de fond de tasse conforme à l'invention un gage de qualité pour son utilisation dans un produit semi-fini de faible épaisseur pour pneumatique. En effet, l'occurrence de formation de trous dans le produit semi-fini lors de sa mise en forme et la probabilité de formation de fissures dans le produit semi-fini sont très considérablement réduites, voire nulles. Le caoutchouc naturel de fond de tasse conforme à l'invention est préférentiellement dépourvu d'impuretés de taille supérieure à 0.1 mm, ce qui permet de réduire encore davantage l'occurrence de formation de trous dans le produit semi-fini lors de sa mise en forme et la probabilité de formation de fissures dans le produit semi-fini.

Les grades de caoutchouc naturel sont traditionnellement caractérisés par une teneur en impuretés dans le caoutchouc naturel. Cette teneur en impuretés dans un caoutchouc naturel est bien connue dans le domaine du caoutchouc naturel sous l'appellation « dirt content » qui fait référence à une méthode du Rubber Research Institute of Malaysia destinée aux caoutchoucs standards de Malaisie. Selon ce standard, la valeur de « dirt content » exprime le pourcentage d'impuretés dans le caoutchouc naturel qui ont une taille supérieure à 44 $\mu$m. De préférence, le caoutchouc naturel de fond de tasse conforme à l'invention a un taux d'impuretés dit « dirt content » inférieur à 0.12%. De manière plus préférentielle, le taux d'impuretés dit « dirt content » dans le caoutchouc naturel de fond de tasse conforme à l'invention est inférieur à 0.05%. Plus la valeur de « dirt content » est faible, plus la part des impuretés dans le caoutchouc naturel est faible. Une faible valeur faible de « dirt content » contribue à améliorer encore la qualité du caoutchouc naturel pour son utilisation dans la fabrication d'un produit semi-fini.

Selon un mode de réalisation de l'invention, le caoutchouc naturel de fond de tasse conforme à l'invention présente un taux d'azote inférieur à 0.4%. Un faible taux d'azote dans le caoutchouc naturel permet de réduire par

4

exemple le risque allergène d'un article contenant le caoutchouc naturel. Le taux d'azote dans le caoutchouc naturel de fond de tasse conforme à l'invention est avantageusement inférieur ou égal à 0.3%.

Selon un autre mode de réalisation de l'invention, le caoutchouc naturel de fond de tasse conforme à l'invention est un caoutchouc naturel stabilisé. On entend par caoutchouc naturel stabilisé un caoutchouc naturel traité par l'addition d'un stabilisant de viscosité. Le traitement de caoutchouc naturel par un stabilisant de viscosité est bien connu de l'homme du métier du caoutchouc naturel. Les stabilisants de viscosité sont également bien connus de l'homme du métier. Le traitement d'un caoutchouc naturel par un stabilisant de viscosité est conventionnellement utilisé pour diminuer la tendance du caoutchouc naturel à durcir au stockage.

A titre de stabilisant de viscosité utile aux besoins de l'invention peut convenir tout composé connu pour stabiliser la viscosité du caoutchouc naturel. On peut citer par exemple l'hydroxylamine, ses sels, les hydroxyalkylamines, leurs sels, le semicarbazide, la dimédone, les composés ayant une fonction triazole et les composés ayant une fonction hydrazide. De préférence, le stabilisant de viscosité est la dimédone, un sel d'acide faible de composés de formule $XNH_2$ ou un sel d'acide fort de composés de formule $XNH_2$ éventuellement neutralisé avec une base forte, où X est un groupe choisi parmi les groupes hydroxyle et hydroxyalkyle en $C_1$-$C_4$. Pour la neutralisation avec une base forte, on peut par exemple se référer à la description de la demande de brevet WO2017085109. De manière très préférentielle, le stabilisant de viscosité est choisi dans le groupe constitué par les composés de formule $XNH_2$ et les sels des composés de formule $XNH_2$, X représentant un groupe hydroxyle ou un groupe hydroxyalkyle en $C_1$-$C_4$, c'est-à-dire contenant 1 à 4 atomes de carbone. De manière encore plus préférentielle, le stabilisant de viscosité est le sulfate d'hydroxylamine ou le sulfate d'hydroxylamine neutralisé avec la soude, très avantageusement le sulfate d'hydroxylamine.

Selon l'un quelconque des modes de réalisation de l'invention, le caoutchouc naturel fond de tasse a préférentiellement une masse molaire moyenne en poids supérieure à 1 000 000 g/mol. La masse molaire moyenne en masse est déterminée par analyse SEC-RI-MALS (Steric Exclusion Chromatography - differential Refractive Index detectors - Multiangle Light Scattering detector). Les échantillons de caoutchouc naturel sont typiquement mis en solution dans le tétrahydrofurane pendant 7 jours à 25°C à une concentration de 5mg/mL. La fraction soluble est collectée et la concentration est ajustée à 2mg/ml. Après filtration à 0.45 µm, 100 µL sont injectés dans un jeu de colonne constitué de quatre colonnes de chez Polymer Lab (2 colonnes PLgel Mixed A et 2 colonnes PLgel mixed B), le solvant d'élution étant du tétrahydrofurane stabilisé (250 ppm de BHT), le débit étant de 0,5 mL/min, la température du système étant de 35°C, la durée d'analyse étant de 90 min. Le système de détection utilisé est double : un détecteur réfractométrique différentiel de concentration (Optilab T-rEX de Wyatt) et un détecteur multiangle de diffusion de la lumière (Dawn Heleos de Wyatt).

Le caoutchouc naturel de fond de tasse conforme à l'invention présente donc un intérêt tout particulier pour être utilisé dans une composition de caoutchouc, notamment pour pneumatique.

La composition de caoutchouc qui comprend le caoutchouc naturel de fond de tasse conforme à l'invention est un autre objet de l'invention. Elle comprend de préférence une charge renforçante.

La charge renforçante peut être tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge. Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm. La charge renforçante peut être utilisée à un taux compris entre 30 et 200 parties en poids pour cent parties de la matrice élastomère (pce). Par matrice élastomère, on entend dans la présente invention l'ensemble des élastomères présents dans la composition de caoutchouc, qu'ils soient conformes ou non à l'invention. La composition de caoutchouc peut contenir un autre élastomère que le caoutchouc naturel conforme à l'invention.

La composition de caoutchouc peut contenir en outre d'autres additifs connus pour être utilisés dans des compositions de caoutchouc pour pneumatiques, tels que des agents de réticulation, des plastifiants, des anti-ozonants, des antioxydants, des charges de remplissage.

La composition de caoutchouc peut être fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 130°C et 200°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

La composition de caoutchouc conforme à l'invention, pouvant être soit à l'état cru (avant réticulation ou vulcanisation), soit à l'état cuit (après réticulation ou vulcanisation), peut être utilisée dans un pneumatique, par exemple sous la forme d'un produit semi-fini pour pneumatique.

Le caoutchouc naturel de fond de tasse conforme à l'invention peut être préparé par un procédé qui comprend les étapes suivantes :

a) Disposer d'un coagulum de fond de tasse,
b) Procéder à un travail de décontamination du coagulum,
c) Comprimer le coagulum à une température allant de 130°C à 210°C,
d) Soumettre le coagulum comprimé à une détente éclair adiabatique à une pression différentielle supérieure ou égale à 40 bars et préférentiellement inférieure à 100 bars,
e) Sécher le coagulum obtenu après l'étape d).

Le coagulum de fond de tasse récolté contient bon nombre d'impuretés telles que des feuilles, des brindilles, du sable et autres débris. Il subit une étape de décontamination qui se décompose elle-même en deux étapes : la décontamination primaire et la décontamination secondaire qui intervient après la décontamination primaire. La décontamination primaire a pour but d'éliminer les objets les plus gros, la décontamination secondaire a pour but d'éliminer des objets plus petits qui n'ont pas été éliminés par l'étape de décontamination primaire. Pour mener à bien la décontamination primaire, le coagulum de fond de tasse récolté est coupé et lavé dans des piscines d'eau selon des opérations bien connues des usines de remilling. La décontamination secondaire comprend une étape de filtration du coagulum sous pression, par exemple dans un dispositif qui comprend une extrudeuse et un moyen de filtration adapté installé en sortie de l'extrudeuse. On peut par exemple se référer au procédé de filtration décrit dans la demande de brevet WO2016162645 ou à celui décrit dans la demande de brevet FR 17/55046. Le procédé permet avantageusement d'éliminer les impuretés de taille supérieure à 1 mm, avantageusement supérieure à 500 $\mu$m, plus avantageusement supérieure à 100 $\mu$m. Comme moyen de filtration conviennent un filtre ou un ensemble de filtres, avantageusement à maille et avantageusement porté par un porte filtre. La taille de la maille des filtres varie avantageusement de 100 $\mu$m à 1 mm. Dans la contamination secondaire, avant d'être filtré, le coagulum peut être déchiqueté, puis lavé à l'eau dans des piscines, ensuite acheminé par exemple dans des crêpeuses et shredders.

Pendant l'étape de décontamination, le coagulum est avantageusement coupé en morceaux de différentes tailles pour faciliter les opérations mises en oeuvre dans l'étape de décontamination. Le coagulum est aussi avantageusement coupé en morceaux à l'issue de l'opération de filtration.

De préférence, le coagulum à l'issue de l'étape de décontamination se présente sous la forme de granulés (en anglais « crumbs ») chargés en eau, la teneur en eau étant généralement supérieure à 10%.

L'étape c) du procédé est une compression du coagulum. Cette compression est nécessaire pour pouvoir soumettre ultérieurement le coagulum à une détente adiabatique. Pour appliquer une détente adiabatique à une pression différentielle supérieure ou égale à 40 bars et préférentiellement inférieure à 100 bars, la pression à laquelle est comprimé le coagulum est typiquement supérieure ou égale à 40 bars.

La compression peut être réalisée dans une machine à vis sans fin équipée d'une filière en bout de vis. Pour atteindre les pressions utiles aux besoins de l'invention en bout de vis dans une machine à vis sans fin, l'homme du métier peut jouer par exemple sur le débit de coagulum dans la machine à vis sans fin, sur la vitesse de la vis, sur sa géométrie, sur la forme des trous de la filière, sur leur nombre ou sur leur diamètre. Une extrudeuse équipée en bout de vis d'une plaque filière comportant plusieurs trous est tout particulièrement préférée.

Dans la présente demande, on entend par extrudeuse une machine à vis sans fin qui comprend une entrée de matière dite trémie, un corps formé d'un cylindre (également appelé fourreau) dans lequel tourne une vis (une ou plusieurs) sans fin et une tête qui sert de support à une filière. Cette machine permet d'appliquer un séchage mécanique ou un séchage thermo-mécanique à un produit imbibé d'un liquide à éliminer par séchage. Le séchage mécanique permet l'élimination du liquide par des forces purement mécaniques (pressage, essorage, ...). Il peut se réaliser par simple transfert de quantité de mouvement et éventuellement sans transfert thermique. Le séchage thermo-mécanique est réalisé par échauffement communiqué au produit à sécher par dégradation de l'énergie mécanique. L'eau incluse dans le produit à sécher se trouve à l'état liquide sous pression et à haute température. Une libération des contraintes jusqu'alors exercées sur le coagulum dans le fourreau a lieu en sortie de filière par la suppression de la compression, ce qui permet la détente éclair adiabatique en sortie de filière. A la sortie de la filière, la détente produite permet aussi de flasher l'humidité et le cas échéant, selon la viscosité du produit, de fragmenter le produit.

L'extrudeuse utile aux besoins de l'invention peut être une extrudeuse disponible sur le marché, notamment celles commercialisées par les sociétés Anderson, FOM et Welding, comme par exemple l'Expander d'Anderson, l'Extruder Dryer de FOM, le VCU de Welding. L'extrudeuse utile aux besoins de l'invention pour l'un quelconque des modes de réalisation de l'invention est de préférence une extrudeuse monovis.

Des variantes d'extrudeuses sont préférentielles en ce qu'elles permettent en sortie de filière d'atteindre des débits plus élevés en coagulum ou de favoriser la détente adiabatique. Une telle variante préférentielle est une extrudeuse dont le fourreau présente dans la zone d'alimentation de l'extrudeuse un (un ou plusieurs) moyen d'évacuation de l'eau (eau libre, sous forme liquide). Comme moyen d'évacuation, on peut citer des rainures dans l'épaisseur du fourreau qui débouchent sur la surface intérieure du fourreau, une ou plusieurs ouvertures dans la zone d'alimentation de l'extrudeuse, ouverture qui permet d'évacuer l'eau hors du fourreau. Ces ouvertures peuvent se présenter sous la forme de fente, de grille, de trou circulaire. La zone d'alimentation est la zone qui se trouve sous l'ouverture de la trémie.

A la pression utile aux besoins de l'invention pour réaliser la compression, le coagulum est porté à l'étape c) à une température allant de 130 à 210°C. Dans une machine à vis sans fin comme une extrudeuse, le travail mécanique sous forte pression s'accompagne d'un échauffement de la matière caoutchouteuse du coagulum, ce qui a pour effet d'augmenter la température du coagulum. La température ne doit pas excéder 210°C pour ne pas dégrader les chaînes polyisoprène. En dessous de 130°C, le procédé n'est pas suffisamment efficace pour réduire le taux d'humidité du caoutchouc naturel. De préférence, la température est comprise entre 170°C et 210°C. De manière plus préférentielle, le coagulum est comprimé à l'étape c) à une température comprise entre 180°C et 210°C. Pour atteindre les températures utiles aux besoins de l'invention, des calories peuvent être aussi apportées en chauffant le moyen utilisé pour réaliser la compression, par exemple en chauffant l'intérieur d'une machine à vis tel que le fourreau d'une extrudeuse par l'intermédiaire d'une double enveloppe.

Le temps pendant lequel le coagulum est soumis à la compression à la température et à la pression utiles aux besoins de l'invention est relativement court pour ne pas dégrader les chaînes polyisoprène, mais suffisant pour apporter la quantité de chaleur suffisante pour pouvoir diminuer l'humidité résiduelle du caoutchouc naturel.

La détente adiabatique réalisée à l'étape d) est caractérisée de détente éclair en ce qu'elle permet au coagulum de passer d'un état comprimé à un état non comprimé de façon quasi immédiate, typiquement en un temps inférieur à la seconde. Elle est réalisée à une pression différentielle supérieure ou égale à 40 bars et préférentiellement inférieure à 100 bars. De préférence, la pression différentielle est de 40 bars à 80 bars. La détente étant adiabatique, la détente se produit à la température à laquelle a été réalisée la compression. En fin de détente, le coagulum est généralement à la pression atmosphérique.

De préférence, l'étape c) et l'étape d) sont mises en oeuvre dans une seule et même machine à vis sans fin, la machine à vis sans fin étant une extrudeuse équipée en bout de vis d'une plaque filière à trous.

Au moment de la détente réalisée à l'étape d), plus le coagulum présente une surface extérieure grande au contact de l'atmosphère, plus la surface d'échange du coagulum avec l'atmosphère est grande, plus le procédé est efficace. Par conséquent, il est préférable que le coagulum présente une surface par unité de volume la plus grande possible au moment de la détente. Ainsi, l'étape d) comprend avantageusement une transformation du coagulum en granulés. Par exemple, dans le cas d'une détente en sortie de filière d'une extrudeuse, le coagulum peut être découpé par la mise en place de moyen apte à découper le coagulum en sortie de filière tel qu'un couteau ou un granulateur, préférentiellement un granulateur. De tels dispositifs comprenant un granulateur en sortie de filière en bout de vis d'une extrudeuse sont bien connus pour être utilisés dans les procédés de fabrication des caoutchoucs synthétiques.

Le procédé comprend après l'étape d) une étape e) de séchage. Cette étape de séchage convectif permet de produire un caoutchouc naturel avec une humidité résiduelle typiquement inférieure à 0.8%. Le séchage est avantageusement un séchage par convection sous air. La température de séchage par convection est comprise préférentiellement dans un domaine allant de 110°C à 150°C. Elle est ajustée en fonction de l'humidité résiduelle dans le caoutchouc naturel à l'issue de l'étape d) et de la surface à sécher développée. Le temps de séchage par convection est ajusté par l'homme du métier en fonction de la température de séchage par convection et en fonction de la teneur en eau résiduelle dans le coagulum à l'issue de l'étape d). Un temps de séchage par convection le plus court possible est préféré pour préserver la structure des chaînes polyisoprène du caoutchouc naturel et ses propriétés. Typiquement le temps de séchage par convection est inférieur à 10 minutes de façon à obtenir un caoutchouc naturel contenant moins de 0.8% d'eau. Tout moyen connu pour sécher par convection peut convenir comme par exemple un lit fluidisé tel qu'un tamis vibrant, dispositif connu et conventionnellement utilisé dans les procédés de fabrication de caoutchoucs synthétiques. En particulier, est préféré un lit fluidisé à air chaud comme un tamis vibrant à air chaud.

Une forme divisée du coagulum est aussi préférée pour l'étape de séchage. Pour les mêmes raisons que celles mises en avant pour l'étape d), la forme divisée permet d'améliorer l'efficacité de l'étape de séchage pour obtenir une humidité résiduelle inférieure à 0.8% dans le caoutchouc naturel, notamment en réduisant la durée de l'étape de séchage. Ainsi, à l'étape de séchage, le caoutchouc naturel est avantageusement sous forme de granulés. Par conséquent si l'étape d) comprend une transformation du coagulum en granulés, le caoutchouc naturel est avantageusement maintenu sous forme de granulés pour pouvoir subir l'étape de séchage sous forme divisée.

Pour préparer le caoutchouc naturel de fond de tasse conforme à l'un des modes de réalisation de l'invention, le procédé comprend une étape supplémentaire qui est l'ajout d'un stabilisant de viscosité au caoutchouc naturel séché (étape f) pour stabiliser la viscosité du caoutchouc naturel. A titre de stabilisant de viscosité utile aux besoins de l'invention peut convenir tout composé connu pour stabiliser la viscosité du caoutchouc naturel. On peut citer par exemple l'hydroxylamine, ses sels, les hydroxyalkylamines, leurs sels, le semicarbazide, la dimédone, les composés ayant une fonction triazole et les composés ayant une fonction hydrazide. De préférence, le stabilisant de viscosité est la dimédone, un sel d'acide faible de composés de formule $XNH_2$ ou un sel d'acide fort de composés de formule $XNH_2$ éventuellement neutralisé avec une base forte, où X est un groupe choisi parmi les groupes hydroxyle et hydroxyalkyle en $C_1$-$C_4$. Pour la neutralisation avec une base forte, on peut par exemple se référer à la description de la demande de brevet WO2017085109. De manière très préférentielle, le stabilisant de viscosité est choisi dans le groupe constitué par les composés de formule $XNH_2$ et les sels des composés de formule $XNH_2$, X représentant un groupe hydroxyle ou un

groupe hydroxyalkyle en $C_1$-$C_4$, c'est-à-dire contenant 1 à 4 atomes de carbone. De manière encore plus préférentielle, le stabilisant de viscosité est le sulfate d'hydroxylamine ou le sulfate d'hydroxylamine neutralisé avec la soude, très avantageusement le sulfate d'hydroxylamine.

L'ajout du stabilisant de viscosité au caoutchouc naturel se fait typiquement par arrosage du caoutchouc naturel avec la quantité souhaitée de stabilisant de viscosité, le caoutchouc naturel étant de préférence sous la forme de granulés. Pour ce faire, le stabilisant de viscosité est généralement mis en solution dans l'eau pour pouvoir procéder à l'arrosage du caoutchouc naturel. Le stabilisant de viscosité est ajouté préférentiellement en une quantité allant de 2.4 mmoles à 24 mmoles, plus préférentiellement de 6 mmoles à 24 mmoles, encore plus préférentiellement de 8 mmoles à 18 mmoles équivalent de dimédone ou équivalent de $XNH_2$ par kilogramme de caoutchouc naturel.

L'étape d'ajout du stabilisant de viscosité est préférentiellement suivie d'un travail mécanique à une température d'au moins 100°C. Le travail mécanique qui a pour fonction de disperser le stabilisant de viscosité dans le caoutchouc naturel peut être effectué au moyen d'un dispositif de déchiquetage et d'homogénéisation. Typiquement, il est mis en oeuvre au moyen d'une machine appelée « prebreaker ».

Un prebreaker est un dispositif de déchiquetage et d'homogénéisation bien connu de l'homme du métier du caoutchouc naturel, puisqu'il est traditionnellement utilisé dans les usines de remilling de caoutchouc naturel. On peut par exemple se référer à la demande de brevet WO 2015189365 qui donne une description détaillée d'un prebreaker.

Les caractéristiques précitées de la présente invention, ainsi que d'autres, seront mieux comprises à la lecture de la description suivante de plusieurs exemples de réalisation de l'invention, donnés à titre illustratif et non limitatif.

## II. EXEMPLES DE REALISATION DE L'INVENTION

Préparation du caoutchouc naturel de fond de tasse selon l'invention :

On récolte un coagulum de fond de tasse. On applique une décontamination primaire au coagulum (slab cutter, wet prebreakers). Pour procéder à la décontamination secondaire, on utilise un dispositif qui comprend cinq crêpeuses en série et une machine comprenant une première extrudeuse, une pompe à engrenage et un porte filtre installé en sortie de la machine à vis sans fin, la pompe à engrenage étant disposée à l'extrémité de la vis et avant le filtre. Les caractéristiques du dispositif sont les suivantes :

Extrudeuse monovis :

- Diamètre de la vis (D) : 60 mm avec diamètre de moyeu constant et le pas de vis constant
- Longueur de la vis : 14 D
- Fourreau avec une surface intérieure lisse qui s'étend depuis la fin de la zone d'alimentation jusqu'à l'extrémité du fourreau la plus proche de la sortie de l'extrudeuse. La zone d'alimentation est rainurée.

Pompe à engrenage :

- Pompe à engrenage de cylindrée 176 $cm^3$/tour

Filtre :

- Diamètre du filtre : 168 mm
- Maille du filtre : un filtre de maille 500 $\mu$m + 2 filtres de maille 2.5 mm

On alimente donc la première extrudeuse avec les granulés de coagulum chargés en eau (18%). La pression et la température à l'entrée du filtre sont de 290 bars et 95°C, le débit de 100 kg/h. La vitesse de la vis d'extrusion est réglée de manière à gaver correctement la pompe à engrenage. La vitesse de la pompe à engrenage est réglée de manière à obtenir le débit de caoutchouc naturel filtré. En sortie de l'étape de filtration, le coagulum est coupé en morceaux de taille variable. On récupère un coagulum ayant un taux d'humidité supérieure à 10%. On constate que les impuretés de taille supérieure à la maille des filtres sont bien retenues sur les filtres, que les mailles des filtres ne sont pas altérées après filtration et ainsi le coagulum qui est obtenu après filtration est bien décontaminé.

On alimente ensuite une deuxième extrudeuse avec le coagulum décontaminé et découpé. L'extrudeuse est une extrudeuse monovis, elle est équipée d'une filière à trous en bout de vis et d'un granulateur disposé en sortie de filière. L'extrudeuse comporte une double enveloppe, son fourreau présente dans la zone d'alimentation des moyens d'évacuation d'eau (rainures, fentes, trous). La vitesse de la vis est de 150 tours/min, la pression est de 62 bars, la température du coagulum est de 186°C, la température et la pression étant mesurées par des capteurs positionnés au plus près de la filière, entre la filière et l'extrémité de la vis la plus proche de la filière. A la sortie de l'extrudeuse, on récupère un caoutchouc naturel sous la forme de granulés qui sont ensuite séchés sur un tamis vibrant à air chaud à une température de 120°C pendant environ 5 minutes. On récupère le caoutchouc naturel, son taux d'humidité étant inférieur à 0.8%.

On procède ensuite à l'arrosage du caoutchouc naturel avec une solution aqueuse de sulfate d'hydroxylamine préparée à 150 grammes de sulfate d'hydroxylamine par litre de solution. Une quantité massique de sulfate d'hydroxylamine par rapport au caoutchouc naturel, en pce de 0.08 est mise sur le caoutchouc naturel, puis on introduit le caoutchouc naturel ainsi arrosé dans un prebreaker, la température du caoutchouc naturel dans le prebreaker étant de 110°C. On récupère le caoutchouc naturel et on le laisse se refroidir.

On mesure son taux d'humidité, son taux d'azote, son indice de rétention de plasticité (PRI), son taux d'impuretés « dirt content » et sa viscosité Mooney.

La teneur en eau est déterminée avec un dessicateur halogène HB43-S Mettler Toledo. Le dessicateur est un dispositif automatisé qui intègre une coupelle, une balance et un couvercle destiné à fermer la coupelle. La coupelle est positionnée sur la balance. Le couvercle comprend un moyen de chauffage par une lampe halogène, ce moyen de chauffage se déclenchant lorsqu'on rabat le couvercle sur la coupelle. Dans la coupelle, on pèse exactement un échantillon de 10 grammes de caoutchouc naturel : le dispositif enregistre le poids correspondant « a ». On rabat le couvercle pour fermer la coupelle, ce qui déclenche la montée en température pour atteindre une consigne de 160°C. Lorsque le dispositif détecte une diminution de poids inférieure 0.001 g par minute, le dispositif relève un poids « b ». La teneur en eau dans l'échantillon est donnée en pourcentage massique par l'équation suivante :

$$\text{Teneur en eau (\%)} = 100*((a-b)/a)$$

Le taux d'azote est mesuré selon la norme ASTM D 3533-90.

Le PRI est mesuré selon la norme ASTM D 3194-04.

Le taux d'impuretés « dirt content » est déterminé selon la méthode décrite par le document intitulé « RRIM TEST METHODS FOR STANDARD MALAYSIAN RUBBERS », SMR Bull. No.7 Rubb. Res. Inst. Malaysia, Edition révisée 1992 par Yu Tong, publiée et imprimée par the Rubber Research Institute of Malaysia, Partie B .4.

Pour mesurer la viscosité Mooney, on utilise un consistomètre oscillant tel que décrit dans la norme française NF T 43-005 (Novembre 1980). La mesure de la viscosité Mooney se fait selon le principe suivant : le caoutchouc naturel est moulé dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de 8 rotations. La viscosité Mooney (ML 1+4) est exprimée en "unité Mooney" (UM, avec 1 UM = 0,83 Newton.mètre).

Résultats :

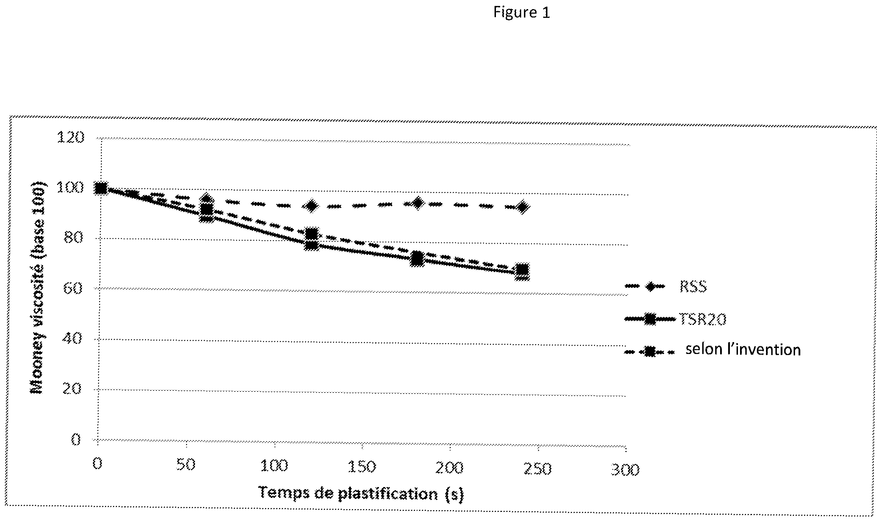

La figure 1 est une représentation graphique de l'évolution de la valeur de la viscosité Mooney d'un caoutchouc naturel donné en fonction du temps de plastification. Dans cette représentation, la viscosité Mooney initiale d'un caoutchouc naturel donnée est égale à 100 par convention. On appelle viscosité initiale d'un caoutchouc naturel la viscosité avant toute plastification. Le tableau 1 recense les valeurs mesurées de PRI, de taux d'azote, d'eau, de dirt content, des viscosités Mooney avant et après plastification du caoutchouc naturel de fond de tasse selon l'invention ainsi que la taille maximum des impuretés présentes dans le caoutchouc naturel de fond de tasse selon l'invention. Pour comparaison, sont également indiquées les valeurs mesurées pour le grade TSR20.

Le tableau 1 montre que le caoutchouc naturel de fond de tasse selon l'invention présente un PRI bien supérieur à celui du grade TSR20. La figure 1 montre aussi que le caoutchouc naturel de fond de tasse selon l'invention et le grade TSR20 voient leur viscosité évoluer de façon similaire au cours de la plastification. Le tableau 1 montre également que le caoutchouc naturel de fond de tasse selon l'invention a des viscosités Mooney très proches de celles du grade TSR20, que ce soit avant, pendant ou après plastification.

En résumé, bien que présentant un PRI plus élevé que le grade TSR20, le caoutchouc naturel de fond de tasse selon l'invention ne requiert pas plus de temps de plastification que le grade TSR20. De façon surprenante, le caoutchouc naturel de fond de tasse selon l'invention présente un PRI bien plus élevé que le grade TSR20 tout en ayant une aptitude à la mise en oeuvre comparable à celle du grade TSR20.

L'évolution de la viscosité Mooney du grade RSS en fonction du temps de plastification est également représentée dans la figure 1, le PRI du grade RSS étant de 83, sa teneur en eau inférieure à 0.8%, son taux d'azote de 0.5% et son dirt content de 0.009. Alors que les caoutchoucs naturels de fond de tasse voient leur viscosité Mooney diminuer de plus de 20% après 250 secondes de plastification, la diminution de la viscosité Mooney du grade RSS est au plus de 5% après le même temps de plastification. La figure 1 montre bien que le grade RSS requiert un temps de plastification beaucoup plus long.

De plus, du point de vue des impuretés, le caoutchouc naturel de fond de tasse est de qualité bien supérieure au grade TSR20 comme le montre les valeurs de dirt content et de taille maximale des impuretés présentes dans le caoutchouc naturel. En cela, sa qualité se rapproche de celle du grade RSS. A l'inverse, le grade TSR20 étant nettoyé uniquement par des opérations successives de déchiquetage et de lavage en piscine contient généralement des objets de taille bien supérieure à 0.5 mm, comme du sable, des débris de feuille, d'écorce.

Le caoutchouc naturel de fond de tasse selon l'invention a l'avantage de présenter à la fois les propriétés de mise en oeuvre du grade TSR20 et les propriétés de résistance à la thermooxydation du grade RSS tout en présentant une pureté qui se rapproche de celle du grade RSS. L'utilisation d'un caoutchouc naturel conforme à l'invention dans une ligne de fabrication de produit semi-fini à base de caoutchouc naturel permet d'assurer un compromis amélioré de performances que sont la productivité d'une ligne de fabrication de produits semi-finis et la qualité des produits semi-finis issus de cette ligne de production.

Tableau 1

|  | selon l'invention | TSR20 |
|---|---|---|
| Teneur en eau | <0.8% | <0.8% |
| Taux d'azote | 0.36 | 0.37 |
| PRI | 89 | 74,5 |
| Dirt content | 0.043 | 0.038 |
| Taille des impuretés | ≤ 0.5 mm | ND* |
| ML avant plastification | 98 | 95 |
| ML après plastification | 82 | 78 |
| *ND non déterminé | | |

## Revendications

1. Caoutchouc naturel de fond de tasse dépourvu d'impuretés de taille supérieure à 0.5 mm et présentant un indice de rétention de plasticité, mesuré selon la norme ASTM D3194-04, supérieur à 80.

2. Caoutchouc naturel de fond de tasse selon la revendication 1 présentant un indice de rétention de plasticité supérieur ou égal à 85.

3. Caoutchouc naturel de fond de tasse selon l'une quelconque des revendications 1 à 2 présentant un taux massique d'impuretés, dirt content, inférieur à 0.12%.

4. Caoutchouc naturel de fond de tasse selon l'une quelconque des revendications 1 à 3 présentant un taux massique d'impuretés, dirt content, inférieur à 0.05%.

5. Caoutchouc naturel de fond de tasse selon l'une quelconque des revendications 1 à 4, lequel caoutchouc naturel présente une teneur en eau inférieure à 0.8% en masse.

6. Caoutchouc naturel de fond de tasse selon l'une quelconque des revendications 1 à 5 présentant un taux massique d'azote inférieur à 0.4%, de préférence inférieur ou égal à 0.3%.

7. Caoutchouc naturel de fond de tasse selon l'une quelconque des revendications 1 à 6, lequel caoutchouc naturel est dépourvu d'impuretés de taille supérieure à 0.1 mm.

8. Caoutchouc naturel de fond de tasse selon l'une quelconque des revendications 1 à 7, lequel caoutchouc naturel est un caoutchouc naturel stabilisé.

9. Caoutchouc naturel de fond de tasse selon la revendication 8, lequel caoutchouc naturel est un caoutchouc naturel stabilisé par un stabilisant de viscosité choisi dans le groupe constitué par les composés de formule $XNH_2$ et les sels des composés de formule $XNH_2$, X représentant un groupe hydroxyle ou un groupe hydroxyalkyle en $C_1$-$C_4$.

10. Caoutchouc naturel de fond de tasse selon la revendication 9 dans lequel le stabilisant de viscosité est le sulfate d'hydroxylamine ou le sulfate d'hydroxylamine neutralisé avec la soude, de préférence le sulfate d'hydroxylamine.

11. Caoutchouc naturel de fond de tasse selon l'une quelconque des revendications 1 à 10, lequel caoutchouc naturel présente une masse molaire moyenne en poids supérieure à 1 000 000 g/mol.

12. Composition de caoutchouc comprenant un caoutchouc naturel défini à l'une quelconque des revendications 1 à 11.

13. Composition de caoutchouc selon la revendication 12 comprenant une charge renforçante.

14. Produit semi-fini comprenant une composition de caoutchouc définie à la revendication 13.

15. Pneumatique comprenant une composition de caoutchouc définie à la revendication 13 ou un produit semi-fini défini à la revendication 14.


**Patentansprüche**

1. Cup-lump-Naturkautschuk, der frei von Verunreinigungen mit einer Größe von mehr als 0,5 mm ist und einen nach der Norm ASTM D3194-04 gemessenen Plastizitätsindex von mehr als 80 aufweist.

2. Cup-lump-Naturkautschuk nach Anspruch 1, der einen Plastizitätsindex von 85 oder mehr aufweist.

3. Cup-lump-Naturkautschuk nach einem der Ansprüche 1 bis 2, der einen Verunreinigungsmassenanteil, dirt content, von weniger als 0,12 % aufweist.

4. Cup-lump-Naturkautschuk nach einem der Ansprüche 1 bis 3, der einen Verunreinigungsmassenanteil, dirt content, von weniger als 0,05 % aufweist.

5. Cup-lump-Naturkautschuk nach einem der Ansprüche 1 bis 4, wobei der Naturkautschuk einen Wassergehalt von weniger als 0,8 Massen-% aufweist.

6. Cup-lump-Naturkautschuk nach einem der Ansprüche 1 bis 5, der einen Stickstoffmassenanteil von weniger als 0,4 %, bevorzugt von 0,3 % oder weniger aufweist.

7. Cup-lump-Naturkautschuk nach einem der Ansprüche 1 bis 6, wobei der Naturkautschuk frei von Verunreinigungen mit einer Größe von mehr als 0,1 mm ist.

8. Cup-lump-Naturkautschuk nach einem der Ansprüche 1 bis 7, wobei der Naturkautschuk ein stabilisierter Naturkautschuk ist.

9. Cup-lump-Naturkautschuk nach Anspruch 8, wobei der Naturkautschuk ein Naturkautschuk ist, der durch einen Viskositätsstabilisator stabilisiert ist, der aus der Gruppe gewählt ist, die durch die Verbindungen mit der Form $XNH_2$ und die Salze der Verbindungen mit der Formel $XNH_2$ gebildet wird, wobei X für eine Hydroxylgruppe oder eine $C_1$-$C_4$-Hydroxyalkylgruppe steht.

10. Cup-lump-Naturkautschuk nach Anspruch 9, bei dem der Viskositätsstabilisator das Hydroxylaminsulfat oder das mit Natron neutralisierte Hydroxylaminsulfat, bevorzugt das Hydroxylaminsulfat ist.

11. Cup-lump-Naturkautschuk nach einem der Ansprüche 1 bis 10, wobei der Naturkautschuk eine gewichtsmittlere Molmasse von mehr als 1 000 000 g/mol aufweist.

**12.** Kautschukzusammensetzung, umfassend einen in einem der Ansprüche 1 bis 11 definierten Naturkautschuk.

**13.** Kautschukzusammensetzung nach Anspruch 12, umfassend einen verstärkenden Füllstoff.

**14.** Halbzeug, umfassend eine in Anspruch 13 definierte Kautschukzusammensetzung.

**15.** Reifen, umfassend eine in Anspruch 13 definierte Kautschukzusammensetzung oder ein in Anspruch 14 definiertes Halbzeug.

**Claims**

**1.** Cup lump natural rubber devoid of impurities with a size of greater than 0.5 mm and having a plasticity retention index measured according to standard ASTM D 3194-04 of greater than 80.

**2.** Cup lump natural rubber according to Claim 1 having a plasticity retention index of greater than or equal to 85.

**3.** Cup lump natural rubber according to either one of Claims 1 and 2, having a weight content of impurities, a dirt content, of less than 0.12%.

**4.** Cup lump natural rubber according to any one of Claims 1 to 3, having a weight content of impurities, a dirt content, of less than 0.05%.

**5.** Cup lump natural rubber according to any one of Claims 1 to 4, which natural rubber has a water content of less than 0.8% by weight.

**6.** Cup lump natural rubber according to any one of Claims 1 to 5, having a weight content of nitrogen of less than 0.4%, preferably of less than or equal to 0.3%.

**7.** Cup lump natural rubber according to any one of Claims 1 to 6, which natural rubber is devoid of impurities with a size of greater than 0.1 mm.

**8.** Cup lump natural rubber according to any one of Claims 1 to 7, which natural rubber is a stabilized natural rubber.

**9.** Cup lump natural rubber according to Claim 8, which natural rubber is a natural rubber stabilized by a viscosity stabilizer selected from the group consisting of the compounds of formula $XNH_2$ and the salts of the compounds of formula $XNH_2$, X representing a hydroxyl group or a $C_1$-$C_4$ hydroxyalkyl group.

**10.** Cup lump natural rubber according to Claim 9, in which the viscosity stabilizer is hydroxylamine sulfate or hydroxylamine sulfate neutralized with sodium hydroxide, preferably hydroxylamine sulfate.

**11.** Cup lump natural rubber according to any one of Claims 1 to 10, which natural rubber has a weight-average molar mass of greater than 1 000 000 g/mol.

**12.** Rubber composition comprising a natural rubber defined in any one of Claims 1 to 11.

**13.** Rubber composition according to Claim 12, comprising a reinforcing filler.

**14.** Semi-finished product comprising a rubber composition defined in Claim 13.

**15.** Tyre comprising a rubber composition defined in Claim 13 or a semi-finished product defined in Claim 14.

Figure 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2017085109 A
- WO 2016162645 A
- FR 1755046
- WO 2015189365 A

**Littérature non-brevet citée dans la description**

- RRIM TEST METHODS FOR STANDARD MALAY-SIAN RUBBERS. **YU TONG.** SMR Bull. No.7 Rubb. Res. Inst. Malaysia. Rubber Research Institute of Malaysia, 1992